# EUROPÄISCHE PATENTSCHRIFT

(11) **EP 3 285 012 B1**
(45) Veröffentlichungstag und Bekanntmachung des Hinweises auf die Patenterteilung: **05.12.2018**
(21) Anmeldenummer: 16184269.5
(22) Anmeldetag: 16.08.2016
(51) Int. Cl.: F24D 3/10, F16K 37/00, F24D 19/10, G05D 23/19

(54) **VENTIL MIT INTEGRIERTEM TEMPERATURMESSFÜHLER, INSBESONDERE FÜR EINE FUSSBODENHEIZUNG, ZUGEHÖRIGES REGELSYSTEM FÜR EINE FUSSBODENHEIZUNG UND VERFAHREN ZUM MESSEN EINES VOLUMENSTROMS**
VALVE WITH INTEGRATED TEMPERATURE MEASUREMENT SENSOR IN PARTICULAR FOR FLOOR HEATING, ASSOCIATED CONTROL SYSTEM FOR FLOOR HEATING AND A METHOD FOR MEASURING A DISCHARGE
SOUPAPE COMPRENANT UNE SONDE DE TEMPÉRATURE INTEGRÉE EN PARTICULIER POUR UN CHAUFFAGE AU SOL, SYSTÈME DE RÉGLAGE CORRESPONDANT POUR UN CHAUFFAGE AU SOL ET PROCÉDÉ DE MESURE DE COURANTE VOLUMÉTRIQUE

(43) Veröffentlichungstag der Anmeldung: 21.02.2018
(73) Patentinhaber: AFRISO-Euro-Index GmbH, 74363 Güglingen (DE)
(72) Erfinder: Blasinger, Matthias, 74363 Güglingen (DE); Frey, Marcus, 75031 Eppingen (DE)
(74) Vertreter: Kohler Schmid Möbus Patentanwälte

(56) Entgegenhaltungen:
- EP-A2- 1 947 395
- DE-A1- 3 340 802
- DE-U1- 8 311 891
- DE-U1- 8 332 412

## Beschreibung

Die vorliegende Erfindung betrifft ein Ventil, insbesondere Rücklaufventil im Heiz- oder Kühlkreis einer Fußbodenheizung, mit einem zwischen Ventileinlass und Ventilauslass angeordneten Ventilsitz, mit einer im Ventilgehäuse verschiebbar geführten Ventilstange, die zwischen einer am Ventilsitz anliegenden, geschlossenen Ventilstellung und einer vom Ventilsitz abgehobenen, geöffneten Ventilstellung verschiebbar ist, und mit einem an der Ventilstange angeordneten Temperaturmessfühler, der die Temperatur des im Ventileinlass befindlichen Heiz- oder Kühlmediums misst, wobei das dem Ventileinlass zugewandte Stangenende der Ventilstange geschlossen ist und der Temperaturmessfühler im Inneren der Ventilstange hinter dem geschlossenen Stangenende, insbesondere in Anlage am geschlossenen Stangenende, angeordnet ist, sowie ein Regelsystem für mindestens einen Heiz- oder Kühlkreis einer Fußbodenheizung mit mindestens einem solchen Ventil, und auch ein Verfahren zum Messen des aktuellen Volumenstroms des Heiz- oder Kühlmediums durch ein solches Ventil.

Ein derartiges Rücklaufventil mit integrierter Rücklauftemperaturerkennung im Heiz- oder Kühlkreis einer Fußbodenheizung ist beispielsweise durch die EP 1 947 395 A2 bekannt geworden.

In der Regel wird für eine Fußbodenheizung ein Verteiler eingesetzt, der das Medium zum Kühlen oder Heizen in die verschiedenen Räume leitet. Am Verteiler befinden sich am Vorlaufstrang Regulierventile zum hydraulischen Abgleichen und Absperren der einzelnen Heizkreise. Die Absperrfunktion wird dabei nur im Servicefall benötigt. Der hydraulische Abgleich ist notwendig, damit die einzelnen Heizkreise entsprechend dem Wärmebedarf versorgt werden. Wäre der Verteiler nicht hydraulisch abgeglichen, würden kürzere Kreise überversorgt und längere Kreise unterversorgt werden. Am Rücklaufstrang befinden sich Ventile, die händisch oder für den Betrieb einer automatischen Temperaturregelung elektrisch mit einem Stellantrieb geöffnet oder geschlossen werden können. Die mit Fußbodenheizung ausgestatteten Räume weisen meist Raumtemperaturmessfühler auf, welche die Ist- mit der Solltemperatur vergleichen. Über eine zentrale Regeleinheit werden die Informationen verarbeitet und die Stellantriebe entsprechend angesteuert. Somit gibt die Regeleinheit je nach Bedarf die Zirkulation der einzelnen Heizkreise frei.

Moderne Regelsysteme übernehmen das Abgleichen des Verteilers, sodass das aufwendige Voreinstellen der Regulierventile entfällt. Dabei werden oftmals die Vorlauf- und Rücklauftemperaturen als weitere Regelparameter erfasst, um eine Über- oder Unterversorgung der einzelnen Räume anhand der Temperaturdifferenz zu erkennen und entsprechend gegenwirken zu können. Ist beispielsweise die Temperaturdifferenz an einem Heizkreis verhältnismäßig sehr gering, zirkuliert das Heiz- oder Kühlmedium zu schnell und muss daher gedrosselt werden.

Bei dem aus EP 1 947 395 A2 bekannten Rücklaufventil ist eine Stößeleinheit mit einem Sensor ausgestattet, der ein Fühlerelement zur Erfassung der auf das Fühlerelement einwirkenden Temperatur hat. In der geschlossenen Ventilstellung befindet sich das Fühlerelement außerhalb des Ventilraums, in dem das Heizmedium ansteht.

Bei dem aus DE 83 32 412 U1 bekannten Rücklaufventil ragt ein Temperaturmessfühler mit seiner Fühlerspitze in den Ventileinlass, um die Rücklauftemperatur des im jeweiligen Rücklaufstrang rückgeführten Heizmediums zu messen. Ein Schaft des Temperaturmessfühlers durchsetzt dabei eine am Ventilgehäuse befestigte Hülse und ist daran befestigt. Aufgrund ihrer vorragenden Fühlerspitze kann der Temperaturmessfühler allerdings leicht beschädigt werden.

Es ist demgegenüber die Aufgabe der Erfindung, bei einem Ventil mit integriertem Temperaturmessfühler den thermischen Kontakt des Temperaturmessfühlers mit dem Heiz- bzw. Kühlmedium weiter zu verbessern.

Diese Aufgabe wird bei dem eingangs genannten Ventil erfindungsgemäß dadurch gelöst, dass das den Temperaturmessfühler aufweisende Stangenende der Ventilstange in der geschlossenen Ventilstellung über den Ventilsitz hinaus in den Ventileinlass hineinragt.

Erfindungsgemäß steht das Stangenende möglichst großflächig mit dem Heiz- bzw. Kühlmedium in thermischem Kontakt.

In einer bevorzugten Ausführungsform des erfindungsgemäßen Ventils ist die Ventilstange als eine an ihrem dem Ventileinlass zugewandten Stangenende geschlossene Hohlwelle ausgebildet, in welcher der Temperaturmessfühler sich möglichst nahe am geschlossenen Stangenende befindet. Der Temperaturmessfühler kann beispielsweise über das dem Ventileinlass abgewandte, offene Stangenende in die Hohlwelle bis zur Anlage am geschlossenen Stangenende eingeschoben sein.

In einer anderen bevorzugten Ausführungsform des erfindungsgemäßen Ventils ist die Ventilstange ein Kunststoff-Spritzteil, in welchem der Temperaturmessfühler als Einlegeteil vollständig von Kunststoff umspritzt ist.

Vorzugsweise ist am Ventil ein Stellantrieb, insbesondere ein Thermo- oder Motorantrieb, befestigt, der mit dem dem Ventileinlass abgewandten Stangenende der Ventilstange zusammenwirkt, um die Ventilstange zwischen der geschlossenen und der geöffneten Ventilstellung zu verstellen.

Besonders bevorzugt weist die Ventilstange, insbesondere an ihrem dem Ventileinlass abgewandten Stangenende, elektrische Anschlusskontakte des Temperaturmessfühlers und der Stellantrieb entsprechende Gegenkontakte auf, die, wenn der Stellantrieb am Ventil befestigt ist, die elektrische Anschlusskontakte des Temperaturmessfühlers kontaktieren. Somit wird allein durch Befestigen des Stellantriebs am Ventil die elektrische Verbindung zwischen Stellantrieb und Temperaturmessfühler hergestellt. Vorteilhaft sind die Anschlussleitungen des Temperaturmessfühlers und die Steuerleitungen des Stellantriebs gemeinsam in einem Kabel angeordnet, welches mit einem Regler verbunden ist.

Die Erfindung betrifft auch einen im Rücklauf einer Fußbodenheizung angeordneten Rücklaufverteiler mit mehreren wie oben ausgebildeten Rücklaufventilen und mit einem Rücklaufrohr, das die Ventilauslässe der Rücklaufventile bildet und das die Ventilsitze der Rücklaufventile aufweist.

Die Erfindung betrifft weiterhin ein Regelsystem für mindestens einen Heiz- oder Kühlkreis einer Fußbodenheizung, aufweisend mindestens ein wie oben ausgebildetes Ventil und einen mit den Anschlussleitungen des Temperaturmessfühlers und den Steuerleitungen des Stellantriebs des mindestens einen Ventils verbundenen Regler, der in Abhängigkeit des Temperatursignals des Temperaturmessfühlers den Stellantrieb ansteuert.

Die Erfindung betrifft schließlich auch ein Verfahren zum Messen des aktuellen Volumenstroms des Heiz- oder Kühlmediums durch ein wie oben ausgebildetes Ventil wobei erfindungsgemäß durch kurzzeitige Bestromung und somit Erwärmung des Temperaturmessfühlers im Heiz- oder Kühlmedium eine Temperaturerhöhung erzeugt wird und über die angelegte Stromstärke und die gemessene Temperaturerhöhung auf den aktuellen Volumenstrom des Heiz- oder Kühlmediums rückgeschlossen wird.

Vorzugsweise sind die Anschlussleitungen des Temperaturmessfühlers und die Steuerleitungen des Stellantriebs gemeinsam in einem Kabel angeordnet, das den Stellantrieb und den Regler miteinander verbindet.

Weitere Vorteile und vorteilhafte Ausgestaltungen des Gegenstands der Erfindung sind der Beschreibung, der Zeichnung und den Ansprüchen entnehmbar. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: schematisch eine Fußbodenheizung mit mehreren erfindungsgemäßen Rücklaufventilen;
- Fig. 2: den Aufbau des erfindungsgemäßen Rücklaufventils mit hohler Ventilstange in einem Längsschnitt;
- Fig. 3: eine vergrößerte Ansicht eines die Ventilstange aufweisenden Ventileinsatzes des in Fig. 2 gezeigten Rücklaufventils; und
- Fig. 4: einen Rücklaufverteiler mit mehreren erfindungsgemäßen Rücklaufventilen.

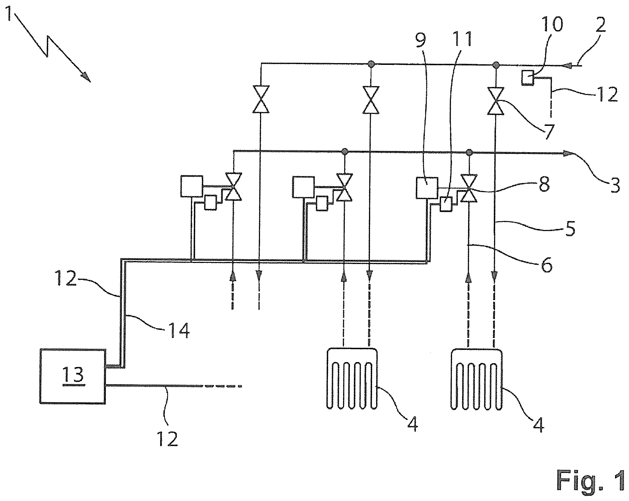

Die in **Fig. 1** gezeigte Fußbodenheizung **1** umfasst einen zentralen Vorlauf **2** für das Heizmedium, einen zentralen Rücklauf **3** für das Heizmedium, mehrere parallele Heizkreise **4,** die jeweils über einen Vorlaufstrang **5** an den zentralen Vorlauf 2 und über einen Rücklaufstrang **6** an den zentralen Rücklauf 3 angeschlossen sind.

An jedem Vorlaufstrang 5 befindet sich ein Regulierventil **7** zum hydraulischen Abgleichen und Absperren der einzelnen Heizkreise 4. Der hydraulische Abgleich ist notwendig, damit die einzelnen Heizkreise 4 entsprechend ihrem Wärmebedarf versorgt werden. An jedem Rücklaufstrang 6 befindet sich ein Rücklaufventil (Hubventil) **8,** das elektrisch mit einem Stellantrieb **9** geöffnet oder geschlossen werden kann. Im zentralen Vorlauf 2 ist ein (zentraler) Temperaturmessfühler **10** angeordnet, der die Temperatur des im zentralen Vorlauf 2 zugeführten Heizmediums misst. Die Rücklaufventile 8 weisen jeweils einen (lokalen) Temperaturmessfühler **11** auf, der die Temperatur des im jeweiligen Rücklaufstrang 6 rückgeführten Heizwassers misst. Die elektrischen Messsignale der Temperaturmessfühler 10, 11 werden über Anschlussleitungen **12** einem Regler **13** zugeführt, der über Steuerleitungen **14** die einzelnen Stellantriebe 9 in Abhängigkeit der Temperatursignale der Temperaturmessfühler 10, 11 elektrisch ansteuert.

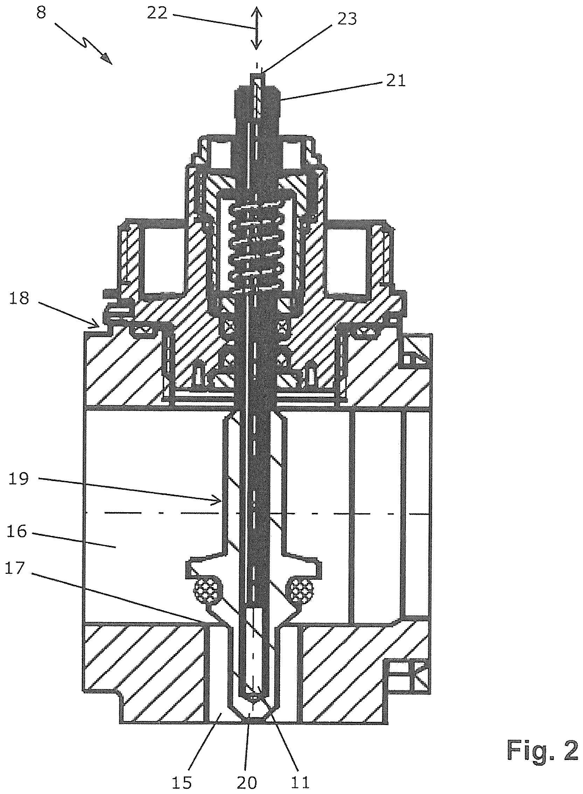

Wie in **Fig. 2** gezeigt, umfasst das Rücklaufventil 8 einen zwischen einem Ventileinlass **15** und einem Ventilauslass **16** angeordneten Ventilsitz **17,** sowie eine im Ventilgehäuse **18** geführte Ventilstange **19** in Form einer Hohlwelle aus z.B. Metall, die zwischen einer am Ventilsitz 17 anliegenden, geschlossenen Ventilstellung und einer vom Ventilsitz 17 abgehobenen, geöffneten Ventilstellung verschiebbar ist. Die Ventilstange 19 ist an ihrem dem Ventileinlass 15 zugewandten Stangenende **20** geschlossen. Der Temperaturmessfühler 11 befindet sich im Inneren der hohlen Ventilstange 19 hinter dem geschlossenen Stangenende 20, das in der geschlossenen Ventilstellung über den Ventilsitz 17 hinaus in den Ventileinlass 15 hineinragt. Der Temperaturmessfühler 11 ist über das dem Ventileinlass 15 abgewandte, offene Stangenende **21** in die Hohlwelle bis zur Anlage am geschlossenen Stangenende 20 eingeschoben. Mit diesem dem Ventileinlass 15 abgewandten Stangenende 21 wirkt der Stellantrieb 9 zusammen, um die Ventilstange 19 zwischen der geschlossenen und der geöffneten Ventilstellung zu verschieben (Doppelpfeil **22**). Der Stellantrieb 9 kann beispielsweise ein Thermo- oder Motorantrieb sein.

An ihrem dem Ventileinlass 15 abgewandten Stangenende 21 weist die Ventilstange 19 weiterhin elektrische Anschlusskontakte **23** des Temperaturmessfühlers 11 auf. Der Stellantrieb 9 weist wiederum Gegenkontakte (nicht gezeigt) auf, die, wenn der Stellantrieb 9 am Rücklaufventil 8 befestigt ist, die elektrische Anschlusskontakte 23 des Temperaturmessfühlers 11 kontaktieren. An die Gegenkontakte des Stellantriebs 9 sind die Anschlussleitungen 12 angeschlossen, die mit den Steuerleitungen 14 des Stellantriebs 9 in einem einzigen Kabel angeordnet sein können.

Zum Messen des aktuellen Volumenstroms des Heiz- oder Kühlmediums durch das Rücklaufventil wird durch kurzzeitige Bestromung und somit Erwärmung des Temperaturmessfühlers 11 im Heiz- oder Kühlmedium eine Temperaturerhöhung erzeugt, und über die dabei angelegte Stromstärke und die gemessene Temperaturerhöhung kann auf den aktuellen Volumenstrom des Heiz- oder Kühlmediums rückgeschlossen werden.

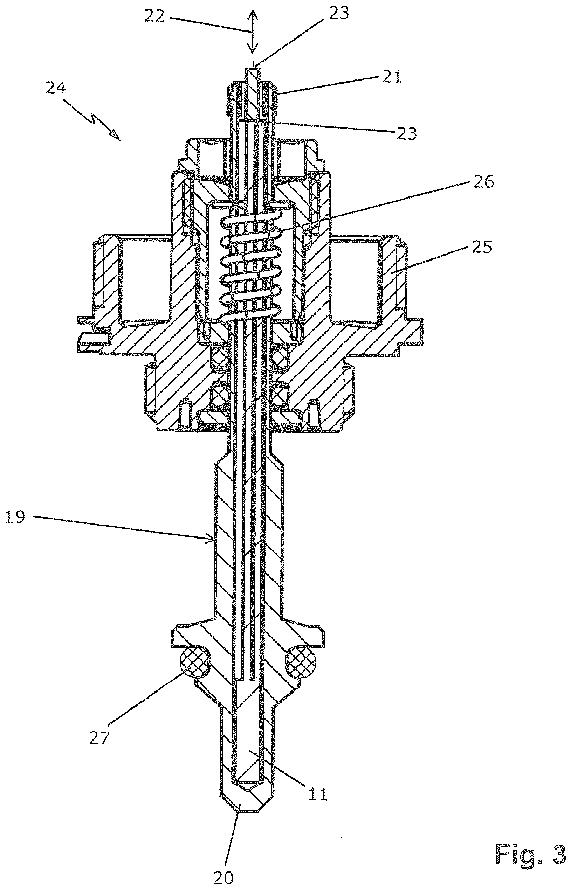

**Fig. 3** zeigt einen die Ventilstange 19 aufweisenden Ventileinsatz **24** des Rücklaufventils 8. Der Ventileinsatz 24 weist ein oberes Ventilgehäuse **25** auf, in dem die Ventilstange 19 gegen die Wirkung einer Rückstellfeder **26** verschiebbar geführt ist. Auf der Ventilstange 19 ist ein Dichtring **27** angeordnet, der mit dem Ventilsitz 17 zusammenwirkt.

Statt wie in den Fig. 2 und 3 hohl kann die Ventilstange 19 auch ein Kunststoff-Spritzteil sein, in dem der Temperaturmessfühler 11 als Einlegeteil ringsum von Kunststoff umspritzt ist.

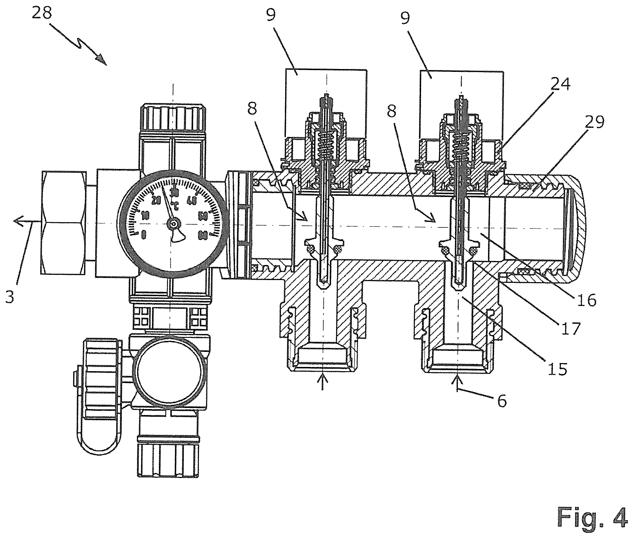

**Fig. 4** zeigt einen im Rücklauf 3 angeordneten Rücklaufverteiler **28** mit einem Rücklaufrohr **29,** welches die Ventilauslässe 16 der mehreren, hier zwei Rücklaufventile 8 bildet. Das Rücklaufrohr 29 weist auch die Ventilsitze 17 der Rücklaufventile 8 auf, deren Ventileinsätze 24 in entsprechende Öffnungen des Rücklaufrohrs 29 eingesetzt sind.

## Patentansprüche

1. Ventil (8), insbesondere Rücklaufventil im Heiz- oder Kühlkreis (4) einer Fußbodenheizung (1),
mit einem zwischen einem Ventileinlass (15) und einem Ventilauslass (16) angeordneten Ventilsitz (17),
mit einer in einem Ventilgehäuse (18) verschiebbar geführten Ventilstange (19), die zwischen einer am Ventilsitz (17) anliegenden, geschlossenen Ventilstellung und einer vom Ventilsitz (17) abgehobenen, geöffneten Ventilstellung verschiebbar ist, und
mit einem an der Ventilstange (19) angeordneten Temperaturmessfühler (11), der die Temperatur des im Ventileinlass (15) befindlichen Heiz- oder Kühlmediums misst,
wobei das dem Ventileinlass (15) zugewandte Stangenende (20) der Ventilstange (19) geschlossen ist und der Temperaturmessfühler (11) im Inneren der Ventilstange (19) hinter dem geschlossenen Stangenende (20), insbesondere in Anlage am geschlossenen Stangenende (20), angeordnet ist, **dadurch gekennzeichnet,**
**dass** das den Temperaturmessfühler (11) aufweisende Stangenende (20) der Ventilstange (19) in der geschlossenen Ventilstellung über den Ventilsitz (17) hinaus in den Ventileinlass (15) hineinragt.

2. Ventil nach Anspruch 1, **dadurch gekennzeichnet, dass** die Ventilstange (19) als eine an ihrem dem Ventileinlass (15) zugewandten Stangenende (20) geschlossene Hohlwelle ausgebildet ist.

3. Ventil nach Anspruch 1, **dadurch gekennzeichnet, dass** die Ventilstange (19) ein Kunststoff-Spritzteil ist, in welchem der Temperaturmessfühler (11) als Einlegeteil von Kunststoff umspritzt ist.

4. Ventil nach einem der vorhergehenden Ansprüche, **gekennzeichnet durch** einen am Ventil (8) befestigten Stellantrieb (9), insbesondere Thermo- oder Motorantrieb, der mit dem dem Ventileinlass (15) abgewandten Stangenende (21) der Ventilstange (19) zusammenwirkt, um die Ventilstange (19) zwischen der geschlossenen und der geöffneten Ventilstellung zu verstellen.

5. Ventil nach einem der vorhergehenden Ansprüche, **dadurch gekennzeichnet, dass** die Ventilstange (19), insbesondere an ihrem dem Ventileinlass (15) abgewandten Stangenende (21), elektrische Anschlusskontakte (23) des Temperaturmessfühlers (20) aufweist.

6. Ventil nach Anspruch 4 und 5, **dadurch gekennzeichnet, dass** der Stellantrieb (9) Gegenkontakte aufweist, die, wenn der Stellantrieb (9) am Ventil (8) befestigt ist, die elektrischen Anschlusskontakte (23) des Temperaturmessfühlers (11) kontaktieren.

7. Ventil nach Anspruch 6, **dadurch gekennzeichnet, dass** elektrische Steuerleitungen (14) des Stellantriebs (9) und die mit den Gegenkontakten des Stellantriebs (9) verbundenen Anschlussleitungen (12) des Temperaturmessfühlers (11) in einem einzigen Kabel verlaufen.

8. Rücklaufverteiler (28) für den Rücklauf (3) einer Fußbodenheizung (1), mit mehreren Rücklaufventilen (8) nach einem der vorhergehenden Ansprüche und mit einem Rücklaufrohr (29), das die Ventilauslässe (16) der Rücklaufventile (8) bildet und das die Ventilsitze (17) der Rücklaufventile (8) aufweist.

9. Regelsystem für mindestens einen Heiz- oder Kühlkreis (4) einer Fußbodenheizung (1), aufweisend mindestens ein Ventil (8) nach einem der Ansprüche 1 bis 7 und einen mit den Anschlussleitungen (12) des Temperaturmessfühlers (11) und den Steuerleitungen (14) des Stellantriebs (9) des mindestens einen Ventils (8) verbundenen Regler (13), der in Abhängigkeit des Temperatursignals des Temperaturmessfühlers (11) den Stellantrieb (9) ansteuert.

10. Regelsystem nach Anspruch 9, **dadurch gekennzeichnet, dass** die Anschlussleitungen (12) des Temperaturmessfühlers (11) und die Steuerleitungen (14) des Stellantriebs (9) gemeinsam in einem Kabel angeordnet sind, das den Stellantrieb (9) und den Regler (13) miteinander verbindet.

11. Verfahren zum Messen des aktuellen Volumenstroms des Heiz- oder Kühlmediums durch ein Ventil (8) nach einem der Ansprüche 1 bis 7, **dadurch gekennzeichnet, dass** durch kurzzeitige Bestromung und somit Erwärmung des Temperaturmessfühlers im Heiz- oder Kühlmedium eine Temperaturerhöhung erzeugt wird und über die angelegte Stromstärke und die gemessene Temperaturerhöhung auf den aktuellen Volumenstrom des Heiz- oder Kühlmediums rückgeschlossen wird.

## Claims

1. Valve (8), in particular a return valve in the heating or cooling circuit (4) of a floor heating (1), comprising
a valve seat (17) which is disposed between a valve inlet (15) and a valve outlet (16),
a valve rod (19) which is displaceably guided in a valve housing (18) and can be displaced between a closed valve position abutting the valve seat (17) and an open valve position lifted off from the valve seat (17), and
a temperature sensor (11) which is arranged on the valve rod (19) and measures the temperature of the heating or cooling medium located in the valve inlet (15);
wherein the rod end (20), facing the valve inlet (15), of the valve rod (19) is closed and the temperature sensor (11) in the inside of the valve rod (19) is arranged behind the closed rod end (20), in particular in abutment on the closed rod end (20),
**characterized in that**
the rod end (20), comprising the temperature sensor (11), of the valve rod (19) projects past the valve seat (17) into the valve inlet (15) in the closed valve position.

2. Valve according to claim 1, **characterized in that** the valve rod (19) is designed in the form of a hollow shaft which is closed at its rod end (20) facing the valve inlet (15).

3. Valve according to claim 1, **characterized in that** the valve rod (19) is a plastic injection-moulded part, in which the temperature sensor (11) is overmoulded by plastic material as insertion part.

4. Valve according to any one of the preceding claims, **characterized by** an actuator (9), in particular a thermal or motor drive, which is mounted to the valve (8) and interacts with the rod end (21) of the valve rod (19) facing away from the valve inlet (15) in order to adjust the valve rod (19) between the closed and the open valve position.

5. Valve according to any one of the preceding claims, **characterized in that** the valve rod (19) comprises electric connection contacts (23) of the temperature sensor (20), in particular at its rod end (21) facing away from the valve inlet (15).

6. Valve according to claim 4 and 5, **characterized in that** the actuator (9) comprises mating contacts which contact the electric connection contacts (23) of the temperature sensor (11) when the actuator (9) is mounted to the valve (8).

7. Valve according to claim 6, **characterized in that** electric control lines (14) of the actuator (9) and the connecting lines (12) of the temperature sensor (11), which are connected to the mating contacts of the actuator (9), extend in one single cable.

8. Return manifold (28) for the return flow (3) of a floor heating (1), comprising a plurality of return valves (8) according to any one of the preceding claims, and a return pipe (29) which forms the valve outlets (16) of the return valves (8) and comprises the valve seats (17) of the return valves (8).

9. Control system for at least one heating or cooling circuit (4) of a floor heating (1) comprising at least one valve (8) according to any one of the claims 1 to 7, and a controller (13) which is connected to the connection lines (12) of the temperature sensor (11) and the control lines (14) of the actuator (9) of the at least one valve (8) and controls the actuator (9) in dependence on the temperature signal of the temperature sensor (11).

10. Control system according to claim 9, **characterized in that** the connection lines (12) of the temperature sensor (11) and the control lines (14) of the actuator (9) are arranged together in a cable which connects the actuator (9) and the controller (13) to one another.

11. Method for measuring the instantaneous volume flow of the heating or cooling medium through a valve (8) according to any one of the claims 1 to 7, **characterized in that** a temperature increase is generated by short-term current supply and thus by heating of the temperature sensor generate in the heating or cooling medium and the applied current strength and the measured temperature increase provide information about the instantaneous volume flow of the heating or cooling medium.

## Revendications

1. Soupape (8), en particulier soupape de retour dans le circuit de chauffage ou de refroidissement (4) d'un système de chauffage par le sol (1),
avec un siège de soupape (17) disposé entre une entrée de soupape (15) et une sortie de soupape (16),
avec une tige de soupape (19) qui est guidée de manière déplaçable dans un boîtier de soupape (18) et qui est déplaçable entre une position de soupape fermée, appliquée contre le siège de soupape (17), et une position de soupape ouverte, soulevée du siège de soupape (17), et
avec un capteur de température (11) disposé sur la tige de soupape (19), qui mesure la température du fluide de chauffage ou de refroidissement se trouvant dans l'entrée de soupape (15),
l'extrémité de tige (20) de la tige de soupape (19) tournée vers l'entrée de soupape (15) étant fermée et le capteur de température (11) étant disposé à l'intérieur de la tige de soupape (19) derrière l'extrémité de tige fermée (20), en particulier appliqué contre l'extrémité de tige fermée (20),
**caractérisée en ce**
**que** dans la position fermée de la soupape, l'extrémité de tige (20) de la tige de soupape (19) présentant le capteur de température (11) fait saillie dans l'entrée de soupape (15) au-delà du siège de soupape (17).

2. Soupape selon la revendication 1, **caractérisée en ce que** la tige de soupape (19) est réalisée sous la forme d'un arbre creux fermé à son extrémité de tige (20) tournée vers l'entrée de soupape (15).

3. Soupape selon la revendication 1, **caractérisée en ce que** la tige de soupape (19) est une pièce en matière plastique moulée par injection dans laquelle le capteur de température (11) est enrobé, sous forme d'insert, de matière plastique.

4. Soupape selon l'une des revendications précédentes, **caractérisée par** un actionneur (9) fixé à la soupape (8), en particulier un entraînement thermique ou motorisé, qui coopère avec l'extrémité de tige (21) de la tige de soupape (19) opposée à l'entrée de soupape (15) pour déplacer la tige de soupape (19) entre la position fermée et la position ouverte de la soupape.

5. Soupape selon l'une des revendications précédentes, **caractérisée en ce que** la tige de soupape (19) présente, en particulier à son extrémité de tige (21) opposée à l'entrée de soupape (15), des contacts de connexion électrique (23) du capteur de température (20).

6. Soupape selon les revendications 4 et 5, **caractérisée en ce que** l'actionneur (9) présente des contacts complémentaires qui, lorsque l'actionneur (9) est fixé à la soupape (8), entrent en contact avec les contacts de connexion électrique (23) du capteur de température (11).

7. Soupape selon la revendication 6, **caractérisée en ce que** des lignes électriques de commande (14) de l'actionneur (9) et les lignes de connexion (12) du capteur de température (11) reliées aux contacts complémentaires de l'actionneur (9) s'étendent dans un seul câble.

8. Collecteur de retour (28) pour le retour (3) d'un système de chauffage par le sol (1), avec plusieurs soupapes de retour (8) selon l'une des revendications précédentes et avec un tuyau de retour (29) qui forme les sorties de soupape (16) des soupapes de retour (8) et qui présente les sièges de soupape (17) des soupapes de retour (8).

9. Système de régulation pour au moins un circuit de chauffage ou de refroidissement (4) d'un système de chauffage par le sol (1), présentant au moins une soupape (8) selon l'une des revendications 1 à 7 et un régulateur (13) relié aux lignes de connexion (12) du capteur de température (11) et aux lignes de commande (14) de l'actionneur (9) de ladite au moins une soupape (8), lequel régulateur (13) commande l'actionneur (9) en fonction du signal de température du capteur de température (11).

10. Système de régulation selon la revendication 9, **caractérisé en ce que** les lignes de connexion (12) du capteur de température (11) et les lignes de commande (14) de l'actionneur (9) sont disposées ensemble dans un câble qui relie entre eux l'actionneur (9) et le régulateur (13).

11. Procédé pour mesurer le débit volumique actuel du fluide de chauffage ou de refroidissement à travers une soupape (8) selon l'une des revendications 1 à 7, **caractérisé en ce qu'**une augmentation de température est produite par une brève alimentation en courant et donc un échauffement du capteur de température dans le fluide de chauffage ou de refroidissement, et le débit volumique actuel du fluide de chauffage ou de refroidissement est déduit de l'intensité du courant appliqué et de l'augmentation de température mesurée.
